# FASCICULE DE BREVET EUROPEEN

(11) **EP 0 379 822 B1**
(45) Date de publication et mention de la délivrance du brevet: **29.12.1993**
(21) Numéro de dépôt: 89403677.1
(22) Date de dépôt: 28.12.1989
(51) Int. Cl.: F17C 3/02, G01M 9/04

(54) **Structure étanche thermiquement isolante de paroi interne d'enceinte sèche**
Thermisch isolierende Abdichtung der Innenwand eines Trockenraumes
Thermally insulating sealing for the internal wall of a dry space

(30) Priorité: 29.12.1988 FR 8817441
(43) Date de publication de la demande: 01.08.1990
(73) Titulaire: SOCIETE NOUVELLE TECHNIGAZ, 78061 Saint-Quentin-en-Yvelines (FR)
(72) Inventeur: Claude, Jean, F-78120 Rambouillet (FR); Deliotte, Claude, F-92240 Malakoff (FR)
(74) Mandataire: Berger, Helmut

(56) Documents cités:
- EP-A- 0 064 886
- DE-A- 2 253 407
- GB-A- 1 442 399
- US-A- 3 535 179
- US-A- 3 860 478
- PATENT ABSTRACTS OF JAPAN, vol. 4, no. 167 (M-42)[649], 19 novembre 1980; & JP-A-55 115 696 (KAHEE SHIMOMURA) 05-09-1980

## Description

L'invention concerne une structure étanche thermiquement isolante de paroi interne d'enceinte sèche d'un tunnel de soufflerie aérodynamique cryogénique.

Des souffleries aérodynamiques cryogéniques qui présentent des parois ayant la structure susmentionnée sont connues. Ces souffleries ont pour inconvénient principal que l'humidité peut pénétrer dans le tunnel, d'où un risque de givrage occasionnant des arrêts de fonctionnement. Plus particulièrement, l'humidité entrant dans le tunnel résulte de la migration vers la veine d'essai fluide, de l'humidité qui est contenue dans l'isolant.

La présente invention a pour but de supprimer ces inconvénients.

Pour atteindre ce but, la structure de paroi selon l'invention comporte des caractéristiques énoncées dans la revendication principale.

Une barrière d'étanchéité sur la face interne d'une structure de paroi est déjà connue par le brevet britannique N° 1 442 399. Ce document a pour objet un conteneur pour le stockage de substances cryogéniques. La barrière d'étanchéité a pour fonction d'empêcher le fluide contenu dans le réservoir de pénétrer dans la paroi délimitant l'enceinte. Or, dans le cas de l'invention, la barrière d'étanchéité résout un problème spécifique qui n'est ni décrit dans le document britannique ni suggéré dans celui-ci et qui consiste à empêcher que l'humidité contenue dans la paroi puisse parvenir dans l'enceinte. La structure de paroi selon l'invention se distinguant déjà du brevet britannique au niveau du problème que la barrière d'étanchéité doit résoudre, elle s'éloigne encore davantage de l'enseignement du brevet britannique par le revêtement de protection mécanique de la barrière d'étanchéité et de conformation de la veine fluide. Cette caractéristique est tout à fait étrangère au brevet britannique, ce qui est logique dans la mesure où celui-ci concerne une structure de paroi pour conteneurs de stockage de produits cryogéniques et où le problème de la protection mécanique de la barrière d'étanchéité et de conformation de la veine fluide ne se pose pas.

D'autres caractéristiques avantageuses de l'invention ressortent des revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
La figure 1 est une vue en coupe, schématique, perpendiculaire à l'axe d'un tunnel de soufflerie ;
La figure 2 est une vue à plus grande échelle et avec arrachement du détail indiqué en II sur la figure 1 ;
La figure 3 est une vue en coupe à plus grande échelle et avec arrachement le long de la ligne III-III de la figure 1 ;
La figure 4 est une vue en perspective et éclatée en direction de la flèche IV de la figure 1 ;
La figure 5 est une vue en perspective d'un panneau isolant de la structure de paroi selon l'invention ; et
La figure 6 est une vue en coupe, avec arrachement, le long d'une ligne périphérique d'une structure de paroi selon l'invention au niveau de deux panneaux isolants juxtaposés.

En se reportant aux figures, on décrira ci-après une structure étanche thermiquement isolante de paroi interne d'une enceinte sèche telle que par exemple un tunnel d'une soufflerie aérodynamique cryogénique.

Cette structure comprend, de l'extérieur vers l'intérieur :
- une paroi externe rigide autoportante 1, par exemple en acier ou en béton ;
- une nappe 2 de panneaux juxtaposés thermiquement isolants, par exemple en mousse rigide alvéolaire à cellules fermées, telle que du polychlorure de vinyle, polyuréthane ou polyuréthane renforcé de fibres de verre ;
- une barrière d'étanchéité 3 de préférence en triplex, c'est-à-dire présentant une structure multicouche comprenant une feuille d'aluminium disposée entre deux couches en tissu de fibres de verre, sur chaque panneau précité, et formée par des plaques juxtaposées, chaque plaque ayant la dimension de la face interne d'un panneau et étant collée sur celle-ci, par exemple, par une colle du type époxy ou polyuréthane ;
- des moyens de réalisation de la continuité d'isolation thermique et d'étanchéité 14, 16, 17 ; et
- une couche de revêtement 4 de protection mécanique de l'isolant et de conformation de la veine fluide.

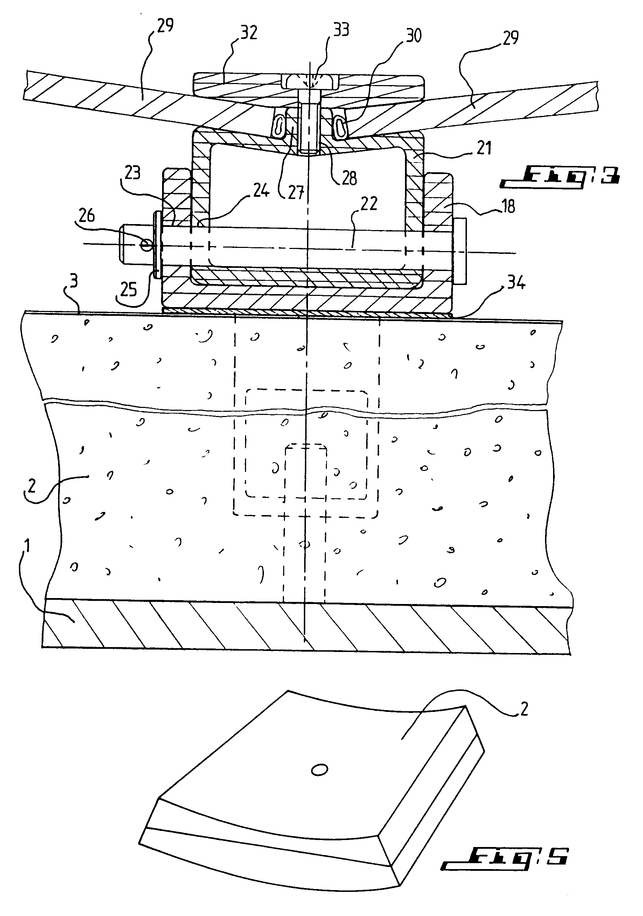

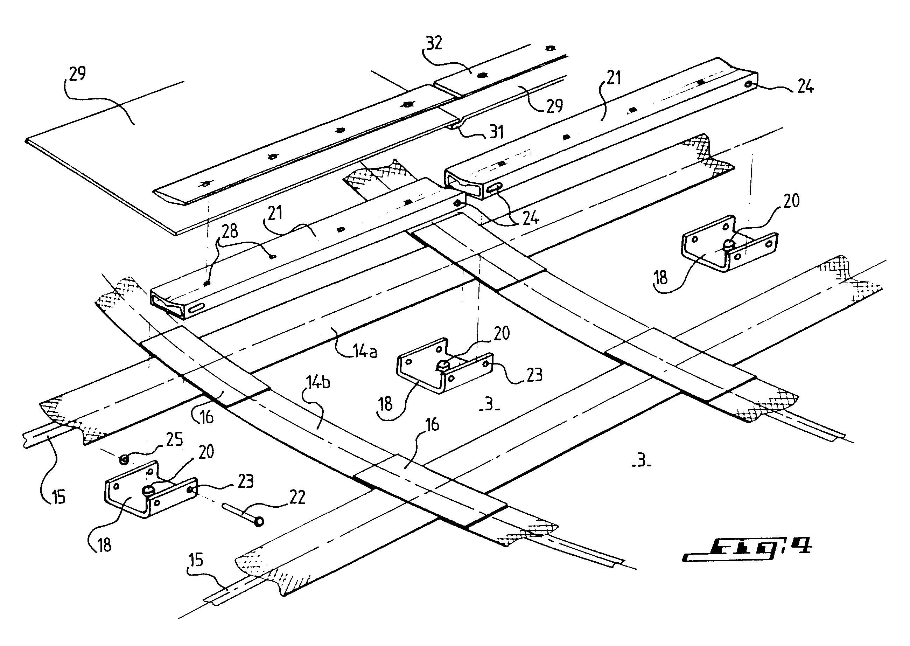

Chaque panneau isolant, réalisé de préférence sous forme d'un panneau à contour apparent rectangulaire suivant la figure 5, comporte, en son centre géométrique, un orifice cylindrique étagé traversant, comprenant, de l'intérieur vers l'extérieur un chambrage 5 s'étendant par exemple sur les quatre cinquième de l'épaisseur du panneau et un trou 6 de diamètre réduit de par exemple environ un quart du diamètre du chambrage 5, adjacent et coaxial au chambrage. Ce dernier reçoit une douille interne de chemisage 7 montée à ajustement glissant et collée à la paroi interne du chambrage. Cette douille est de préférence en une résine synthétique, par exemple en époxy, armée de fibres notamment de verre, Kevlar, carbone, c'est-à-dire en un matériau suffisamment isolant pour réduire le pont thermique et dont le coefficient de contraction thermique dans les différentes directions sera aussi voisin que possible de celui de la matière du panneau 2 pour réduire au maximum les contraintes d'interface. Le fond de la douille 7 est traversé d'un trou central de diamètre, légèrement supérieur à celui de l'alésage 6 coaxial.

La fixation de chaque panneau 2 s'effectue par un goujon par exemple métallique 8 soudé ou scellé à la paroi autoportante externe 1 et traversant le trou 6 pour pénétrer dans la douille 7 où il reçoit un écrou vissé 9 à embase 10 monobloc de serrage en la même matière que la douille 7. La partie extrême opposée de la douille présente un diamètre rétréci pour comporter un filetage interne 11 délimité longitudinalement par un épaulement annulaire interne 12. L'espace intérieur entre cet épaulement 12 et le fond de la douille 7 est rempli au moins en majeure partie par une mousse isolante (13) de colmatage.

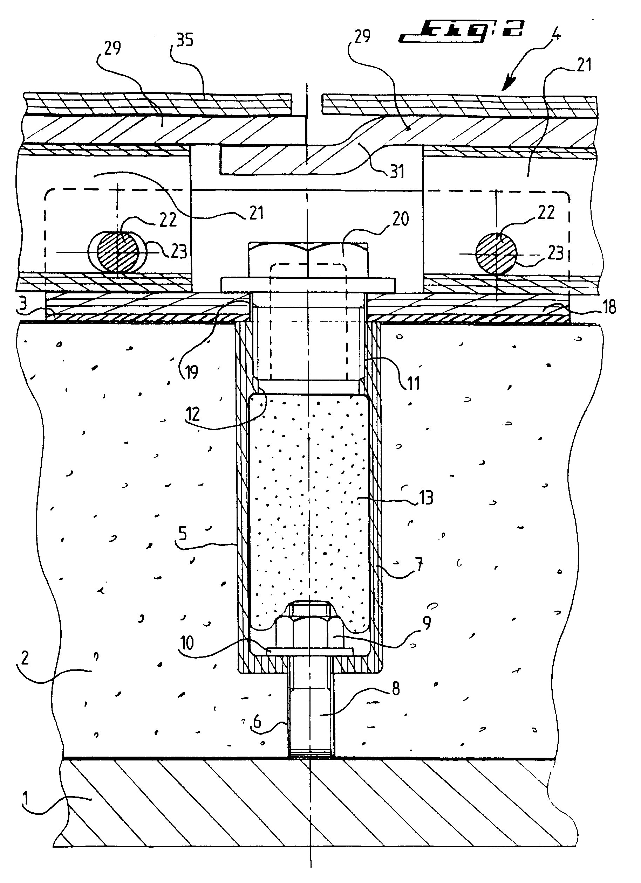

La continuité de la barrière d'étanchéité 3 est assurée par des bandes couvre-joint 14 de la même nature que la barrière 3 et recouvrant les intervalles 15 entre panneaux adjacents en étant collées sur ceux-ci. Les bandes 14a, parallèles à une même direction de joint, ont une longueur correspondant à la distance d'entre-axe entre deux intervalles successifs 15 parallèles à la direction orthogonale tandis que chaque bande 14b parallèle à cette direction orthogonale, a une longueur correspondant à la distance d'écartement, entre bords en regard, de deux bandes successives 14a, de façon qu'à chaque croisement d'intersection d'intervalles, les quatre bandes se rejoignent bout à bout en étant situées dans un même plan. A chaque telle intersection de bandes se trouve un couvre-joint 16 collé, s'étendant suivant la direction de la bande 14b et en la même matière que les bandes 14 (figure 4).

Avant la pose des bandes 14, tous les joints 15 entre panneaux 2 sont remplis d'une mousse isolante souple 17.

Sur la barrière d'étanchéité 3 de chaque panneau 2 est fixée, par collage et serrage, une attache en U 18 en la même matière que la douille 7 et collée par son âme à la barrière 3. Le centre de l'âme de l'attache 18 est traversé d'un trou 19 coaxial à la douille 7 et traversé par un bouchon fileté 20 ayant une tête à embase, vissée dans l'alésage fileté 11 de la douille 7 de façon à serrer l'attache 18 contre la barrière 3 pendant le séchage de l'assemblage collé. Ce bouchon 20 est en la même matière que l'attache 18 et est collé par son embase contre la face interne de l'âme de l'attache pour réaliser un assemblage étanche.

Toutes les attaches 18 d'une même rangée longitudinale de panneaux 2 sont alignées de façon que leurs ailes homologues soient longitudinalement alignées.

Deux attaches 18 successives reçoivent, dans leur creux, une barre creuse ou tubulaire 21 à profil de section transversale généralement rectangulaire en la même matière que la douille 7 ou en alliage léger. La longueur de chaque barre 21 correspond sensiblement à la distance d'entre-axe des deux trous de fixation 19 de deux attaches successives 18. Chaque barre 21, emboîtée par chaque extrémité dans une attache 18, y est fixée aux ailes de l'attache par une broche 22 à tête, traversant deux trous coaxiaux respectifs 23 des deux ailes opposées de l'attache et deux trous coaxiaux respectifs 24 des deux parois latérales de la barre 21 et recevant, à son extrémité opposée à sa tête, une rondelle 25 et une goupille 26 métalliques. Les deux trous à une extrémité de chaque barre sont ronds et ceux de l'extrémité opposée sont oblongs pour permettre la libre contraction thermique. Les extrémités voisines de deux barres 21 successives, montées dans la même attache 18, y sont espacées de façon à être de part et d'autre de la vis 20.

Chaque barre 21 comporte, sur sa face opposée à sa face d'appui dans l'attache, une nervure longitudinale 27 saillante de la même longueur que la barre et pourvue de trous filetés 28 régulièrement espacés traversant la paroi de la barre.

Sur les barres 21 est posée une nappe de tôles 29, par exemple en acier inoxydable ou en alliage léger, à contour rectangulaire ou trapézoïdal, deux tôles voisines en direction transversale aux nervures étant placées de part et d'autre de chaque nervure 27 avec éventuellement interposition d'une cale souple 30 entre nervure et tôle, tandis que deux tôles, voisines en direction longitudinale, sont en recouvrement mutuel coplanaire, grâce au soyage 31 de l'une des tôles, au droit des attaches 18 dans l'intervalle entre deux barres 21 successives. Ces tôles sont fixées par serrage au moyen de plaques de fixation 32 percées de trous lamés correspondant aux trous 28 des nervures 27 et assujetties à celles-ci par des vis 33 vissées dans les trous 28. Les plaques 32 sont en la même matière que les barres 31.

Il est encore à noter qu'entre chaque attache 18 et la barrière d'étanchéité 3 est interposée éventuellement au moins une cale de réglage 34 collée par ses deux faces.

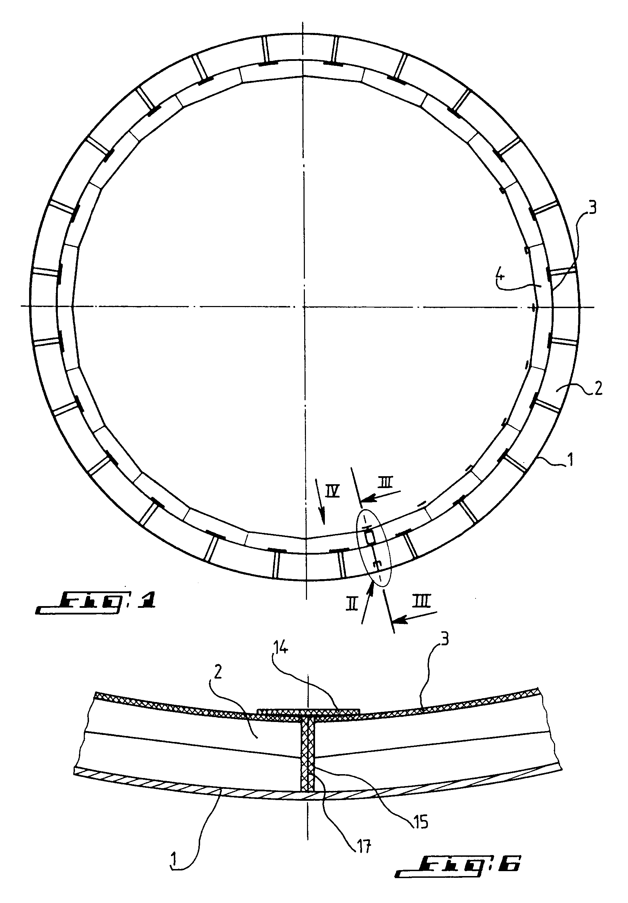

On constate en outre, à la figure 2, que des plaques de protection 35 peuvent être montées sur la surface interne des panneaux 29.

## Revendications

1. Structure étanche thermiquement isolante de paroi interne d'enceinte sèche, d'un tunnel de soufflerie cryogénique, comprenant une paroi externe rigide autoportante (1), intérieurement recouverte d'une couche en un matériau thermiquement isolant (2), susceptible de contenir de l'humidité ayant tendance à pénétrer dans l'espace interne de l'enceinte, laquelle couche porte sur sa face interne une barrière d'étanchéité (3) pour empêcher l'humidité contenue dans la matière isolante de pénétrer dans l'espace interne de l'enceinte, la dite structure comprenant un revêtement (29) de protection mécanique de la barrière d'étanchéité (3) et de conformation de la veine-fluide, qui est montée sur ladite barrière (3) par un dispositif de fixation locale (18, 21, 32), permettant une compensation des mouvements relatifs thermiques dudit revêtement par rapport à ladite barrière d'étanchéité (3).

2. Structure selon la revendication 1, caractérisée en ce que la couche de recouvrement thermiquement isolante comprend une nappe de panneaux juxtaposés (2), la barrière d'étanchéité (3) comporte des plaques fixées chacune sur la face interne d'un panneau (2), avantageusement par collage, et que des moyens de réalisation de la continuité de l'isolation thermique et d'étanchéité (14, 16, 17) sont prévus au niveau des intervalles entre panneaux et plaques adjacentes.

3. Structure selon l'une des revendications 1 ou 2, caractérisée en ce que les plaques de barrière d'étanchéité (3) présentent une structure multicouche comprenant une feuille d'aluminium entre deux couches externes en tissu de fibres de verre.

4. Structure selon l'une des revendications 2 ou 3, caractérisée en ce que les moyens de réalisation de la continuité de l'étanchéité comprennent des bandes couvre-joint (14, 16) avantageusement de la même nature que les plaques de barrière (3), qui recouvrent les intervalles entre plaques de barrière d'étanchéité (3) adjacente.

5. Structure selon l'une des revendications 2 à 4, caractérisée en ce que les moyens de réalisation de la continuité de l'isolation thermique comprennent un produit (17) de remplissage des joints (15) entre panneaux isolants (2) adjacents, tel qu'une mousse isolante souple.

6. Structure selon l'une des revendications 4 ou 5, caractérisée en ce que les bandes couvre-joint (14) comprennent des bandes (14a) parallèles à une même direction de joint, d'une longueur correspondant à la distance d'entre-axe entre deux intervalles successifs (15) parallèles à la direction orthogonale, des bandes (14b) parallèles à cette direction orthogonale, d'une longueur correspondant à la distance d'écartement entre bords en regard, de deux bandes successives (14a), de façon qu'à chaque croisement d'intersection d'intervalle, les quatre bandes se rejoignent bout à bout en étant situées dans un même plan, et, à chaque intersection de bandes (14a, 14b), un couvre-joint (16) recouvrant ladite intersection et en la même matière que les bandes (14a, 14b).

7. Structure selon l'une des revendications précédentes, caractérisée en ce que le dispositif de fixation locale comprend des attaches (18) en forme de U, de préférence en une résine synthétique telle que de l'époxy armé de fibres notamment de verre, kevlar ou carbone, qui sont fixées, avantageusement par collage et serrage, chacune sur une plaque de barrière (3), au centre de celle-ci, par leur âme, de façon que les attaches d'une même rangée longitudinale de plaques de barrière (3) sont alignées de façon que leurs ailes homologues soient longitudinalement alignées, et des barres (21) avantageusement en la même matière que les attaches (18) ou en alliage léger, qui sont fixées dans le creux desdites attaches et portent des panneaux de revêtement (29).

8. Structure selon la revendication 7, caractérisée en ce que chaque attache précitée (18) comprend des moyens de serrage comportant une douille (7) qui traverse transversalement le panneau isolant (2) correspondant et est fixée à ses extrémités respectivement à la paroi interne autoportante (1) et l'attache (18), par des moyens de serrage tels que des vis et écrous.

9. Structure selon l'une des revendications 7 ou 8, caractérisée en ce que chaque barre (21) comporte, sur sa surface opposée à sa face d'appui dans l'attache (18), une nervure longitudinale ( 27) saillante permettant, en coopération avec des plaques de fixation (32), de fixer par serrage entre ladite face opposée et cette plaque, les panneaux de revêtement (29), chaque panneau venant en appui latéral contre ladite nervure (27), le cas échéant avec interposition d'une cale souple (30).

10. Structure selon la revendication 9, caractérisée en ce que deux barres de support (21) alignées et fixées à une même attache (18) présentent entre leurs extrémités en regard un intervalle permettant un recouvrement mutuel coplanaire de deux panneaux de recouvrement (29), avantageusement grâce au soyage (31) de l'un des panneaux.

## Claims

1. Thermally insulating fluid-tight structure of an internal dry enclosure wall of a cryogenic wind tunnel comprising a self-supporting external rigid wall (1) covered inside with a layer of a thermally insulating material (2) likely to contain moisture having a tendency to penetrate into the internal space of the enclosure, which layer carries on its internal face a sealing barrier (3) to prevent the moisture contained in the insulating material from penetrating into the internal space of the enclosure, the said structure comprising a lining (29) for the mechanical protection of the sealing barrier (3) and for the conformation of the jet stream, which is mounted onto the said barrier (3) by a local fastening device (18, 21, 32) permitting a compensation for the thermal relative motions of the said lining with respect to the said sealing barrier (3).

2. Structure according to claim 1, characterized in that the thermally insulating cover layer comprises a sheet of juxtaposed panels (2), the sealing barrier (3) comprises plates fastened each one advantageously through sticking onto the internal face of one panel (2) and that means for providing the continuity of the thermal and sealing insulation (14, 16, 17) are provided at the level of the gaps between panels and adjacent plates.

3. Structure according to one of claims 1 or 2, characterized in that the plates of the sealing barrier (3) exhibit a multilayer structure comprising an aluminium foil between two external layers of glass fiber fabric.

4. Structure according to one of claims 2 or 3, characterized in that the means for providing the continuity of the sealing comprise welt strips (14, 16) advantageously of the same nature as the barrier plates (3), which cover the gaps between adjacent sealing barrier plates (3).

5. Structure according to one of claims 2 to 4, characterized in that the means for providing the continuity of the thermal insulation comprise a product (17) such as a flexible insulating foam for filling in the joints (15) between adjacent insulating panels (2).

6. Structure according to one of claims 4 or 5, characterized in that the welt strips (14) comprise strips (14a) parallel to a same direction of joint, with a length corresponding to the distance between axes of two successive gaps (15), respectively, parallel to the orthogonal direction, strips (14b) parallel to this orthogonal direction, with a length corresponding to the spacing distance between confronting edges of two successive strips (14a) so that at each gap intersection crossing, the four strips are meeting endwise while being located in a same plane and at each intersection of strips (14a, 14b) a welt strip (16) covering the said intersection and of the same material as the strips (14a, 14b).

7. Structure according to one of the foregoing claims, characterized in that the local fastening device comprises U-shaped fasteners (18) preferably of a synthetic resin such as epoxy reinforced with in particular glass, Kevlar or carbon fibers which are fastened advantageously by gluing and clamping each one onto a barrier plate (3) in the center thereof with their web so that the fasteners of a same longitudinal row of barrier plates (3) are aligned in a manner that their homologous flanges be longitudinally aligned and bars (21) advantageously of the same material as the fasteners (18) or of light alloy which are fastened into the hollow of the said fasteners and carries lining panels (29).

8. Structure according to claim 7, characterized in that each aforesaid fastener (18) comprises clamping means comprising a socket (7) which extends through and across the corresponding insulating panel (2) and is fastened with its ends to the self-supporting internal wall (1) and to the fastener (18), respectively, by tightening means such as screws and nuts.

9. Structure according to one of claims 7 or 8, characterized in that each bar (21) comprises on its surface opposite to its bearing surface in the fastener (18), a projecting longitudinal rib (27) permitting in co-operation with fastening plates (32) to fasten through clamping between the said opposite face and this plate, the lining panels (29), each panel being caused to laterally bear upon the said rib (27) if need be with the interposition of a flexible block (30).

10. Structure according to claim 9, characterized in that two aligned support bars (21) fastened to one same fastener (18) exhibit between their confronting ends a gap permitting a coplanar mutual covering of two lining panels, advantageously owing to a double elbow bend (31) of one of the panels.

## Patentansprüche

1. Wärmeisolierender dichter Aufbau einer Trockenumhüllungsinnenwand eines Tiefstemperaturwindtunnels, mit einer selbsttragenden steifen Aussenwand (1), die innen mit einer Schicht aus einem wärmeisolierenden Werkstoff (2) überdeckt ist, der Feuchtigkeit, die die Neigung hat, in den Innenraum der Umhüllung einzudringen, enthalten kann, welche Schicht auf ihrer Innenfläche eine dichte Sperrlage (3) trägt, um die in den isolierenden Werkstoff enthaltene Feuchtigkeit zu verhindern, in den Innenraum der Umhüllung einzudringen, wobei der besagte Aufbau einen Auskleidungsbelag (29) zum mechanischen Schutz der dichten Sperrlage (3) und zur Gestaltung des Stromfadens aufweist, der an der besagten Sperrlage (3) durch eine den Ausgleich der relativen thermischen Bewegungen des besagten Auskleidungsbelags in bezug auf die besagte dichte Sperrlage (3) gestattende örtliche Befestigungsvorrichtung angeordnet ist.

2. Aufbau nach Anspruch 1, dadurch gekennzeichnet, dass die wärmeisolierende Deckschicht eine Lage von nebeneinander liegenden Tafeln (2) umfasst und die dichte Sperrlage (3) jeweils an der Innenseite einer Tafel (2) vorteilhaft durch Kleben befestigte Platten aufweist und das Mittel (14, 16, 17) zur Herstellung der Kontinuierlichkeit der Wärmeisolierung und Abdichtung im Bereich der Fugen zwischen Tafeln und angrenzenden Platten vorgesehen sind.

3. Aufbau gemäss einer der Ansprüche 1 oder 2, dadurch gekennzeichnet, dass die Sperrlageplatten (3) ein eine Aluminiumfolie zwischen zwei Aussenschichten aus Glasfaserstoff umfassendes mehrlagiges Gefüge aufweisen.

4. Aufbau nach einem der Ansprüche 2 oder 3, dadurch gekennzeichnet, dass die Mittel zur Herstellung der Kontinuierlichkeit der Abdichtung Fugendeckstreifen (14, 16) vorteilhaft mit derselben Beschaffung wie die Sperrlageplatten (3) aufweisen, welche die Fugen zwischen angrenzenden Abdichtungsperrlageplatten (3) bedecken.

5. Aufbau nach einen der Ansprüche 2 bis 4, dadurch gekennzeichnet, dass die Mittel zur Herstellung der Kontinuierlichkeit der Wärmeisolierung ein Erzeugnis (17), wie einen nachgiebigen isolierenden Schaum, zur Ausfüllung der Fugen (15) zwischen angrenzenden isolierenden Tafeln (2) umfassen.

6. Aufbau nach einem der Ansprüche 4 oder 5, dadurch gekennzeichnet, dass die Fugendeckstreifen (14) zu einer selben Fugenrichtung parallele Streifen (14a) mit einer dem Abstand zwischen Mittellinien von zwei aufeinanderfolgenden, zur orthogonalen Richtung parallelen Fugen (15) entsprechenden Länge, zu dieser orhtogonalen Richtung parallele Streifen (14b) mit einer der Abstandsentfernung zwischen einander zugewandten Rändern von zwei aufeinanderfolgenden Streifen (14a) entsprechenden Länge aufweisen, so dass an jeder Fugenschnittstellenkreuzung, die vier Streifen stumpf zusammenstossen und in der selben Ebene gelegen sind und an jeder Schnittstelle von Streifen (14a, 14b) eine Fugendeckleiste (16) aus dem selben Werkstoff, wie die Streifen (14a, 14b) die besagte Schnittstelle überdeckt.

7. Aufbau nach einem der vorangehenden Ansprüche, dadurch gekennzeichnet, dass die örtliche Befestigungsvorrichtung U-förmige Befestigungsanschlüsse (18) vorteilhaft aus Kunstharz, wie insbesondere mit Glas-, Kevlar- oder Kohlenstofffasern verstärktes Epoxyd aufweist, die vorteilhaft durch Kleben und Einklemmen jeweils an eine Sperrlageplatte (3) in der Mitte derselben durch deren Steg befestigt sind, so dass die Befestigungsanschlüsse einer selben Längsreihe von Sperrlageplatten (3) fluchtend ausgerichtet sind, so dass deren homologen Flanchen in Längsrichtung fluchtend ausgerichtet sind und Stangen (21) vorteilhaft aus dem selben Werkstoff, wie die Befestigungsanschlüsse (18) oder aus Leichtlegierung aufweist, die in der Aushöhlung der besagten Befestigungsanschlüsse befestigt sind und die Auskleidungsbelagtafeln (29) tragen.

8. Aufbau nach Anspruch 7, dadurch gekennzeichnet, dass jeder vorgenannte Befestigungsanschluss (18) eine Hülse (7) aufweisende Klemmittel umfasst, die die entsprechende isolierende Tafel (2) quer durchsetzt und mit ihren Enden jeweils an die selbsttragende Innenwand (1) und an dem Befestigungsanschluss (18) durch Klemmittel wie Schrauben und Muttern befestigt ist.

9. Aufbau nach einem der Ansprüche 7 oder 8, dadurch gekennzeichnet, dass jede Stange (21) an ihrer der Abstützfläche des Befestigungsanschlusses (18) entgegengesetzten Fläche eine vorspringende Längsrippe (27)aufweist, die es gestattet, in Zusammenwirkung mit Befestigungsplatten (32), die Auskleidungsbelagtafeln (29) zwischen der besagten entgegengesetzten Fläche und dieser Platte durch Einklemmen zu befestigen, wobei jede Tafel sich seitlich an der besagten Rippe (27) im Bedarfsfall mit Zwischenfügung eines geschmeidigen Unterlageklotzes (30) abstützt.

10. Aufbau nach Anspruch 9, dadurch gekennzeichnet, dass zwei fluchtend ausgerichtete und an einem selben Befestigungsanschluss (18) befestigte Tragstangen (21) zwischen ihren einander zugewandten Enden einen die geseitige koplanare Abdeckung von zwei Auskleidungsbelagtafeln (29), vorteilhaft dank der Kröpfung (31) der einen der Tafeln gestattenden Zwischenraum aufweisen.
